# EUROPEAN PATENT APPLICATION

(11) **EP 3 862 215 A1**
(43) Date of publication of application: **11.08.2021**
(21) Application number: 21155410.0
(22) Date of filing: 05.02.2021
(51) Int. Cl.: B60L 53/14, B25J 9/02, B60L 53/16, B60L 53/18, B60L 53/37

(54) **CHARGING CONNECTION DEVICE, ELECTRIC VESSEL, CHARGING ARRANGEMENT AND METHOD FOR ESTABLISHING AN ELECTRICAL CONNECTION BETWEEN A CHARGING CONNECTION DEVICE AND AN ELECTRIC VESSEL**

(30) Priority: 06.02.2020 EP 20155841
(71) Applicant: 3MAR Oy, 20240 Turku (FI)
(72) Inventor: IMMONEN, Pauli, 21250 Masku (FI)
(74) Representative: Berggren Oy

(57) **Abstract**

The present invention provides a charging connection device (100), an electric vessel (200) and a method for establishing an electrical connection between a charging connection device (100) and an electric vessel (200). In the present invention, the electrical connection between the charging connection device (100) and the electric vessel (200) is established by coupling an electrical connector (101) of the charging connection device (100) to a counterpart electrical connector (201) of the electric vessel (200). The coupling is performed by using an imaging device (113) attached to the electrical connector (101) to detect the position of a light source (204) attached to the counterpart electrical connector (201), and then, based on the detected position of the light source (204), moving the electrical connector (101) towards the counterpart electrical connector (201).

## Description

### TECHNICAL FIELD OF THE INVENTION

The present invention relates to a charging connection device, an electric vessel and a method for establishing an electrical connection between a charging connection device and an electric vessel according to the preambles of the appended independent claims. The invention also relates to a charging arrangement comprising a charging connection device and an electric vessel.

### BACKGROUND OF THE INVENTION

Strict environmental regulations force shipping companies to move from conventional diesel vessels to plug-in hybrid and all-electric vessels. These vessels have a battery system that provides electric power to an electric propulsion motor of the vessel.

A battery system of a plug-in hybrid or all-electric vessel can be charged with an onshore charging device. One known charging device is intended to be located on a mooring dock. The charging device allows a battery system of a vessel to be charged while the vessel is docked. Electric power is supplied to the battery system of the vessel through an electrical connector of the charging device that is arranged to be coupled to and decoupled from a counterpart electrical connector mounted on the vessel manually by operating personnel.

A problem associated with the known charging device is that coupling and decoupling of the electrical connector is difficult and time-consuming. Another problem associated with the known charging device is that its use is difficult or even impossible in harsh weather conditions, which are typically characterised by high waves and changes in water level. Still another problem associated with the known charging device is that its use can be dangerous to the operating personnel.

### OBJECTIVES OF THE INVENTION

It is the main objective of the present invention to reduce or even eliminate the prior art problems presented above.

It is an objective of the present invention to provide a charging connection device enabling to charge an electric vessel. In more detail, it is an objective of the invention to provide a charging connection device that can be coupled to and decoupled from an electric vessel in a fast and reliable manner. It is a further objective of the present invention to provide a charging connection device enabling to charge an electric vessel in harsh weather conditions.

It is also an objective of the invention to provide an electric vessel that can be charged through a charging connection device. In more detail, it is an objective of the invention to provide an electric vessel to which a charging connection device can be coupled to and decoupled from in a fast and reliable manner. It is a further objective of the present invention to provide an electric vessel that can be charged in harsh weather conditions.

It is also an objective of the invention to provide a charging arrangement for charging an electric vessel.

It is also an objective of the invention to provide a fast and reliable method for establishing an electrical connection between a charging connection device and an electric vessel. It is a further objective of the present invention to provide a method enabling to connect a charging connection device to an electric vessel in harsh weather conditions.

In order to realise the above-mentioned objectives, the charging connection device, the electric vessel and the method according to the invention are characterised by what is presented in the characterising portions of the appended independent claims. Advantageous embodiments of the invention are described in the dependent claims.

### DESCRIPTION OF THE INVENTION

A charging connection device according to the invention comprises an electrical connector for electrically connecting the charging connection device to an electric vessel, means for moving the electrical connector, and an imaging device attached to the electrical connector and configured to detect the position of a light source attached to a counterpart electrical connector in the electric vessel. In the charging connection device according to the invention the means for moving the electrical connector is configured to move the electrical connector towards the counterpart electrical connector based on the detected position of the light source.

The charging connection device according to the invention is used for charging an electric vessel. The electrical connection between the charging connection device and the electric vessel is established by coupling the electrical connector of the charging connection device to the counterpart electrical connector of the electric vessel. The charging connection device enables to supply electric power from an electric power supply to a battery system of the electric vessel. The charging connection device can supply DC (direct current) and/or AC (alternating current) power to the electric vessel. The electric power supply is electrically connected to the electrical connector of the charging connection device by means of electric cables.

The electrical connector comprises a plug portion for inserting into a socket portion of the counterpart electrical connector. The electrical connector may comprise prongs for inserting into receptacles in the counterpart electrical connector. Alternatively, the electrical connector may comprise receptacles for receiving prongs of the counterpart electrical connector. The prongs and receptacles are electrical terminals through which electric power is conveyed. Instead of using a galvanic connection between the electrical connector and the counterpart electrical connector, electric power may also be transferred by using an inductive coupling, preferably a resonant inductive coupling between the connectors. Resonant inductive coupling is the near field wireless transmission of electrical energy between two magnetically coupled coils that are part of resonant circuits tuned to resonate at the same frequency. A transmitter coil in the electrical connector can be used to transmit electric power across an intervening space to a receiver coil in the counterpart electrical connector.

The electrical connector of the charging connection device can be coupled to the counterpart electrical connector of the electric vessel by using the means for moving the electrical connector. The electrical connector is moved towards and into electrical contact with the counterpart electrical connector by utilising the position of the light source in the counterpart electrical connector. The position of the light source is determined with the imaging device that is attached to the electrical connector. The imaging device can be located on the end of the plug portion of the electrical connector, and it can comprise, for example, a digital camera.

The charging connection device according to the invention can be attached on a ramp, whereby an electric vessel may be charged while the electric vessel is docked to the ramp. The electric vessel can be arranged to be docked to the ramp at its bow or stern. The charging connection device is preferably attached close to the docking end of the ramp. The ramp is preferably pivotally mounted to the shore so that the docking end of the ramp can move up and down as a result of water interaction.

An advantage of the charging connection device according to the invention is that it can be coupled to and decoupled from an electric vessel in an easy, fast and reliable manner. Especially it has been found that the light emitted by the light source in the counterpart electrical connector enables to determine the location of the counterpart electrical connector accurately under all possible lighting conditions. Another advantage of the charging connection device according to the invention is that it enables to charge an electric vessel in harsh weather conditions.

According to an embodiment of the invention the imaging device comprises an infrared camera. The infrared (IR) camera is a device that creates an image using infrared light (radiation). Preferably, in this case, the light source that is attached to the counterpart electrical connector comprises at least one infrared light-emitting diode (IR LED). When the light emitted by the light source is infrared light and the infrared camera is used to detect the infrared light, the location of the counterpart electrical connector can be determined very accurately under all possible lighting conditions. Because infrared light is used, the changes in the visible light do not disturb the detection of the counterpart electrical connector.

According to an embodiment of the invention the imaging device comprises an optical filter configured to block at least a portion of the visible light. The optical filter can be configured to block the light having a wavelength shorter than 650 nm, and preferably shorter than 700 nm. The optical filter is configured to transmit infrared light. The imaging device comprises a digital camera that is preferably an infrared camera. The optical filter is arranged in front of the camera. Preferably, in this case, the light source that is attached to the counterpart electrical connector comprises at least one infrared light-emitting diode. The optical filter can be a band-pass optical filter that is configured to transmit the wavelength of the infrared light-emitting diode. An advantage of the optical filter is that it improves the detection of the counterpart electrical connector.

According to an embodiment of the invention the means for moving the electrical connector comprises a telescopic arm having a first end and a second end, the electrical connector being pivotally attached to the first end of the telescopic arm.

The length of the telescopic arm is adjustable so that the electrical connector can be moved in the longitudinal direction of the telescopic arm. The length of the telescopic arm can be adjusted based on the position of the light source in the counterpart electrical connector. The length of the telescopic arm can be adjusted, for example, by using a pneumatic cylinder, a hydraulic cylinder or an electric cylinder. The telescopic arm may comprise an outer arm and an inner arm that is arranged inside the outer arm. The electrical connector can be attached to the inner arm that is arranged to be moveable relative to the outer arm so that the electrical connector can be moved.

The electrical connector is pivotally attached to the first end of the telescopic arm. The pivotal attachment of the electrical connector to the telescopic arm facilitates the coupling of the electrical connector to the counterpart electrical connector, because it enables to easily arrange the mounting face of the electrical connector to a correct position with respect to the mounting face of the counterpart electrical connector. The charging connection device may comprise means for pivoting the electrical connector relative to the telescopic arm. The electrical connector can be pivoted relative to the telescopic arm based on the position of the light source in the counterpart electrical connector. The means for pivoting the electrical connector relative to the telescopic arm may comprise one or more of the following: a pneumatic cylinder, a hydraulic cylinder or an electric cylinder attached between the electrical connector and the telescopic arm. The number and type of the cylinders can vary depending on the application.

According to an embodiment of the invention the electrical connector is pivotally attached to the first end of the telescopic arm with two hinges arranged perpendicularly relative to each other. The use of two perpendicularly arranged hinges allows the electrical connector to pivot in perpendicular directions, and thus the hinges facilitate the coupling of the electrical connector to the counterpart electrical connector.

According to an embodiment of the invention at least one of the two hinges is provided with a spring assembly attached between the hinge and the first end of the telescopic arm. The spring assembly is used to carry the load and to absorb shocks to the electrical connector.

According to an embodiment of the invention the means for moving the electrical connector comprises a main arm having a first end and a second end, the first end of the main arm being pivotally attached to the second end of the telescopic arm, and means for pivoting the telescopic arm relative to the main arm.

The telescopic arm and the main arm are pivotally attached at their ends to each other. The relative position between the two arms, i.e. the angle between the telescopic arm and the main arm, can be changed by using the means for pivoting the telescopic arm relative to the main arm. The telescopic arm can be pivoted relative to the main arm based on the position of the light source in the counterpart electrical connector. By pivoting the telescopic arm relative to the main arm, the electrical connector that is attached to the first end of the telescopic arm can be moved to a desired height.

The means for pivoting the telescopic arm relative to the main arm may comprise one or more of the following: a pneumatic cylinder, a hydraulic cylinder or an electric cylinder attached between the telescopic arm and the main arm. The number and type of the cylinders can vary depending on the application.

The second end of the main arm can be pivotally attached to a ramp. The charging connection device may comprise means for pivoting the main arm relative to the ramp. This arrangement enables to compensate the tilting of the ramp due to waves and water level changes. The means for pivoting the main arm relative to the ramp may comprise one or more of the following: a pneumatic cylinder, a hydraulic cylinder or an electric cylinder attached between the main arm and the ramp. The number and type of the cylinders can vary depending on the application.

According to an embodiment of the invention the charging connection device comprises means for identifying the electric vessel. The identifying means are preferably based on the use of RFID (Radio frequency identification). The identifying means may comprise, for example, an RFID reader configured to identify an RFID tag in the electric vessel. The identification of the electric vessel can be used to begin the procedure of coupling the electrical connector of the charging connection device to the counterpart electrical connector of the electric vessel.

According to an embodiment of the invention the charging connection device comprises means for detecting when the electrical connector is in electrical contact with the counterpart electrical connector. The detecting means may comprise electrical and/or optical components for detecting the coupling. The information obtained from the detecting means can be used in deciding when electric power can be supplied to the electric vessel.

According to an embodiment of the invention the charging connection device comprises means for communicating with the electric vessel. The communication between the charging connection device and the electric vessel is preferably optical communication in which light is used to carry the signal. The communication means may comprise an optical fibre connector that is attached to the end of the plug portion of the electrical connector. The optical fibre connector is meant to be connected to a counterpart optical fibre connector that is attached to the bottom of the socket portion of the counterpart electrical connector.

According to an embodiment of the invention the charging connection device comprises means for measuring the angle between the longitudinal axis of the telescopic arm and the horizontal plane, and the means for pivoting the telescopic arm relative to the main arm is configured to pivot the telescopic arm relative to the main arm and/or the means for pivoting the main arm relative to the ramp is configured to pivot the main arm relative to the ramp based on the measured angle. The means for pivoting the telescopic arm relative to the main arm can be configured to pivot the telescopic arm relative to the main arm and/or the means for pivoting the main arm relative to the ramp can be configured to pivot the main arm relative to the ramp in such a manner that the angle between the longitudinal axis of the telescopic arm and the horizontal plane stays essentially at a desired value. The advantage of this is that it enables to keep the telescopic arm in an optimal position for coupling the electrical connector of the charging connection device to the counterpart electrical connector of the electric vessel. If the charging connection device is attached to a ramp that is pivotally mounted to the shore, this arrangement enables to compensate the tilting of the ramp due to waves and water level changes.

According to an embodiment of the invention the means for measuring the angle between the longitudinal axis of the telescopic arm and the horizontal plane comprises an inclinometer attached to the telescopic arm. By an inclinometer is meant an instrument for measuring angles of tilt with respect to gravity. An inclinometer generates an artificial horizontal plane and measures angular tilt with respect to this horizontal plane. An inclinometer is also known, for example, as a tilt meter, tilt indicator, slope gauge, gradient meter, level gauge and level meter.

A suitable inclinometer to be used in the charging connection device can be, for example, a two-axis MEMS (Micro Electro Mechanical Systems) inclinometer, which enables simultaneous two-dimensional tilt angles measurement. A two-axis MEMS inclinometer can be digitally compensated and precisely calibrated for nonlinearity for operating temperature variation resulting in higher angular accuracy over wider angular measurement range. Preferably, the inclinometer provides an electronic interface based, for example, on CAN (Controller Area Network).

An electric vessel according to the invention comprises a counterpart electrical connector for electrically connecting the electric vessel to a charging connection device, and a light source attached to the counterpart electrical connector and configured to emit light to an imaging device attached to an electrical connector of the charging connection device.

The electric vessel according to the invention can be charged with a charging connection device according to the invention. The charging connection device is electrically connected to an electric power supply that can supply electric power through the charging connection device to the electric vessel. The electrical connection between the charging connection device and the electric vessel is established by coupling the electrical connector of the charging connection device to the counterpart electrical connector of the electric vessel. The coupling is performed by using the imaging device of the charging connection device to detect the position of the light source, and then, based on the detected position of the light source, moving the electrical connector towards and into electrical contact with the counterpart electrical connector. The light source can comprise one or more light-emitting diodes (LEDs). The counterpart electrical connector comprises a socket portion for receiving a plug portion of the electrical connector.

By an electric vessel is meant a vessel, such as a ship, ferry, boat or the like that comprises a battery system for providing electric power to an electric propulsion motor of the vessel. The electric vessel can be an all-electric vessel or a plug-in hybrid vessel. On the all-electric vessel, all the power, for both propulsion and auxiliaries, comes from the battery system. The plug-in hybrid vessel has also a conventional diesel engine for producing electric power to the electric propulsion motor. The battery system can be charged by coupling an electrical connector of a charging connection device to a counterpart electrical connector of the electric vessel and then supplying electric power to the battery system.

The counterpart electrical connector can be located on a bow or stern of the electric vessel. The electric vessel may alternatively have a counterpart electrical connector both on its bow and stern so that the battery system of the electric vessel can be charged, irrespective of whether the electric vessel is docked at its bow or stern. The electric vessel may comprise a ramp for people and vehicles.

An advantage of the electric vessel according to the invention is that a charging connection device can be coupled to and decoupled from the electric vessel in an easy, fast and reliable manner. Especially it has been found that the light emitted by the light source in the counterpart electrical connector enables to determine the location of the counterpart electrical connector accurately under all possible lighting conditions.

According to an embodiment of the invention the light source comprises at least one infrared light-emitting diode. The infrared light-emitting diode can be configured to emit infrared light ranging from a wavelength of 700 nm to 1 mm. The imaging device of the charging connection device may comprise a digital camera, preferably an infrared camera, and an optical filter that is configured to block at least a portion of the visible light. An advantage of the infrared light-emitting diode is that it improves the detection of the counterpart electrical connector. Because infrared light is used, the changes in the visible light do not disturb the detection of the counterpart electrical connector.

According to an embodiment of the invention the counterpart electrical connector comprises two hatches for covering an opening of a socket portion of the counterpart electrical connector. A plug portion of an electrical connector of a charging connection device is meant to be inserted into the socket portion. Electrical terminals of the counterpart electrical connector are in the bottom of the socket portion. The opening of the socket portion has a rectangular shape. The hatches are attached in connection with the opening of the socket portion. Preferably, the hatches are hinged to opposite sides of the socket portion. The hatches can be opened into the socket portion by pushing them with the electrical connector. An advantage of the hatches is that they protect the interior of the socket portion.

According to an embodiment of the invention the light source is attached to the hatch.

According to an embodiment of the invention the counterpart electrical connector comprises a guiding element for guiding a plug portion of the electrical connector into the socket portion. The guiding element is attached in connection with the opening of the socket portion. The guiding element can comprise guiding plates, which are attached to the sides of the socket portion. Preferably, the guiding plates are tilted outwards from the socket portion. The guiding plates may be attached to the sides of the counterpart electrical connector in such a manner that they form a shape of a frustum of a pyramid. An advantage of the guiding element is that it facilitates the coupling of the electrical connector to the counterpart electrical connector.

According to an embodiment of the invention the counterpart electrical connector comprises a proximity sensor configured to sense the presence of the electrical connector. The proximity sensor can emit an electromagnetic field or a beam of electromagnetic radiation and detect changes in the field or return signal. The proximity sensor can be attached to the guiding element or to a wall of the socket portion. Information received from the proximity sensor can be utilised in the moving of the electrical connector.

According to an embodiment of the invention the electric vessel comprises means for detecting when the counterpart electrical connector is in electrical contact with the electrical connector. The detecting means may comprise electrical and/or optical components for detecting the coupling. The detecting means may comprise a push switch attached to the bottom of the socket portion. The push switch can be pushed by the plug portion of the electrical connector. The information obtained from the detecting means can be used in deciding when electric power can be supplied to the electric vessel.

According to an embodiment of the invention the electric vessel comprises means for communicating with the charging connection device. The communication between the electric vessel and the charging connection device is preferably optical communication in which light is used to carry the signal. The communication means may comprise a counterpart optical fibre connector that is attached to the bottom of the socket portion of the counterpart electrical connector. The counterpart optical fibre connector is meant to be connected to an optical fibre connector that is attached to the end of the plug portion of the electrical connector.

A charging arrangement according to the invention comprises a charging connection device according to the invention, and an electric vessel according to the invention. The charging connection device is electrically connected to an electric power supply that can supply electric power through the charging connection device to the electric vessel. The charging arrangement enables to charge the electric vessel.

A method according to the invention for establishing an electrical connection between a charging connection device and an electric vessel comprises using a light source attached to a counterpart electrical connector of the electric vessel to emit light, using an imaging device attached to an electrical connector of the charging connection device to detect the position of the light source, and moving the electrical connector towards the counterpart electrical connector based on the detected position of the light source.

In the method according to the invention, the electrical connection between the charging connection device and the electric vessel is established by coupling the electrical connector of the charging connection device to the counterpart electrical connector of the electric vessel. The coupling is performed by using the imaging device of the charging connection device to detect the position of the light source, and then, based on the detected position of the light source, moving the electrical connector towards and into electrical contact with the counterpart electrical connector. The charging connection device enables to supply electric power from an electric power supply to a battery system of the electric vessel.

The light source may comprise one or more infrared light-emitting diodes. The infrared light-emitting diode can be configured to emit infrared light ranging from a wavelength of 700 nm to 1 mm. The imaging device may comprise a digital camera, preferably an infrared camera, and an optical filter that is configured to block at least a portion of the visible light.

An advantage of the method according to the invention is that it enables to connect a charging connection device to an electric vessel in an easy, fast and reliable manner. Especially it has been found that the light emitted by the light source in the counterpart electrical connector enables to determine the location of the counterpart electrical connector accurately under all possible lighting conditions.

According to an embodiment of the invention the method comprises detecting whether the electrical connector is in electrical contact with the counterpart electrical connector, and if the electrical connector is in electrical contact with the counterpart electrical connector, supplying electric power from the charging connection device to the electric vessel.

According to an embodiment of the invention the method comprises keeping the electrical connector in electrical contact with the counterpart electrical connector by actively moving the electrical connector towards the counterpart electrical connector.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the charging connection device, the electric vessel, the charging arrangement as well as the method according to the invention, even though this is not always separately mentioned.

### BRIEF DESCRIPTION OF THE DRAWINGS

- Fig. 1: illustrates a charging connection device according to an embodiment of the invention,
- fig. 2: illustrates an electric vessel according to an embodiment of the invention, and
- fig. 3: illustrates a charging arrangement according to an embodiment of the invention.

### DETAILED DESCRIPTION OF THE DRAWINGS

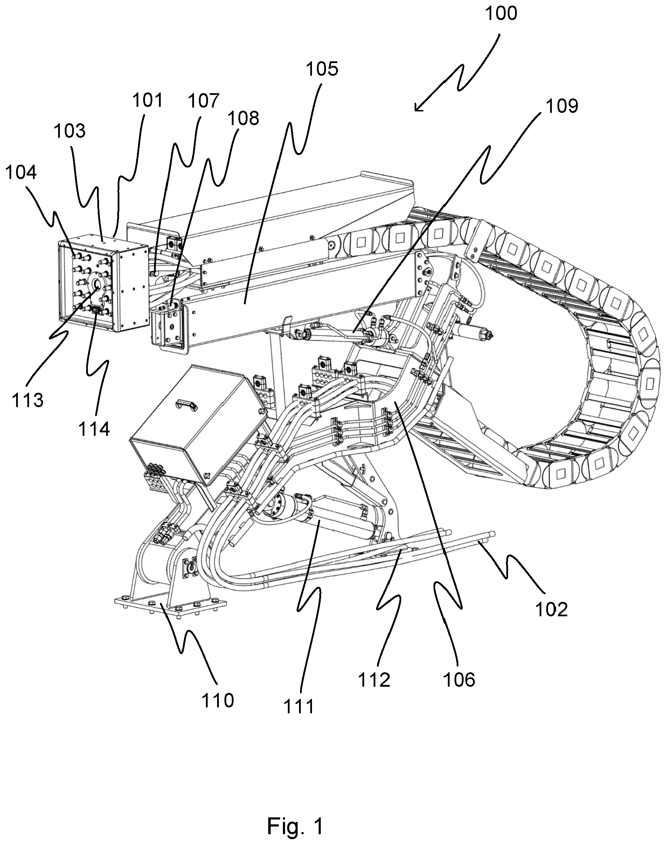

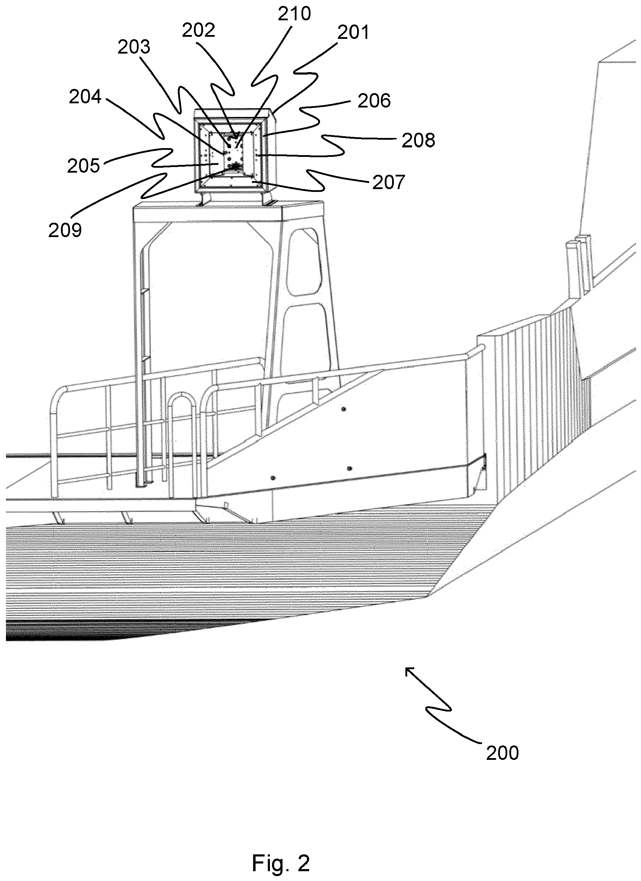

Fig. 1 illustrates a charging connection device 100 according to an embodiment of the invention, and fig. 2 illustrates an electric vessel 200 according to an embodiment of the invention. The charging connection device 100 of fig. 1 is used for electrically connecting an electric power supply (not shown in fig. 1) to the electric vessel 200 of fig. 2. The electric power supply supplies electric power through the charging connection device 100 to a battery system (not shown in fig. 2) of the electric vessel 200.

The charging connection device 100 comprises an electrical connector 101 for electrically connecting the charging connection device 100 to the electric vessel 200. The electric power supply is electrically connected to the electrical connector 101 with cables 102. The electrical connection between the charging connection device 100 and the electric vessel 200 is established by coupling the electrical connector 101 of the charging connection device 100 to a counterpart electrical connector 201 of the electric vessel 200. The counterpart electrical connector 201 is located on a bow of the electric vessel 200. The electrical connector 101 comprises a plug portion 103 that can be inserted into a socket portion 202 of the counterpart electrical connector 201.

The electrical connector 101 comprises prongs 104 for inserting into receptacles 203 in the counterpart electrical connector 201. The prongs 104 protrude from the end of the plug portion 103. The receptacles 203 are located in the bottom of the socket portion 202. The prongs 104 and the receptacles 203 are electrical terminals through which electric power is conveyed from the charging connection device 100 to the electric vessel 200.

The charging connection device 100 comprises a telescopic arm 105 and a main arm 106 for moving the electrical connector 101. The electrical connector 101 is pivotally attached to a first end of the telescopic arm 105 with two hinges 107 that are arranged perpendicularly relative to each other. The use of two perpendicularly arranged hinges 107 facilitates the coupling of the electrical connector 101 to the counterpart electrical connector 201. One of the hinges 107 is provided with a spring assembly 108 that is attached between the hinge 107 and the first end of the telescopic arm 105. The spring assembly 108 carries the load and absorbs shocks to the electrical connector 101.

A second end of the telescopic arm 105 is pivotally attached to a first end of the main arm 106. The telescopic arm 105 can be pivoted relative to the main arm 106 with a hydraulic cylinder 109 that is attached between the telescopic arm 105 and the main arm 106. By pivoting the telescopic arm 105 relative to the main arm 106, the electrical connector 101 can be raised or lowered. The telescopic arm 105 enables to move the electrical connector 101 in the longitudinal direction of the telescopic arm 105.

A second end of the main arm 106 can be pivotally attached to a ramp (not shown in fig. 1) with a mounting flange 110. The main arm 106 can be pivoted relative to the ramp with a hydraulic cylinder 111 that is attached between the main arm 106 and a mounting flange 112. The mounting flange 112 can be attached to the ramp.

The electrical connector 101 comprises an imaging device 113 that is attached to the end of the plug portion 103. The imaging device 113 is used for detecting the position of a light source 204 that is attached to one of the hatches 205 in the counterpart electrical connector 201. By utilising the position of the light source 204, the electrical connector 101 can be moved towards and into electrical contact with the counterpart electrical connector 201. The electrical connector 101 is moved by adjusting the length of the telescopic arm 105, the angle between the telescopic arm 105 and the main arm 106, and/or the angle between the main arm 106 and the ramp. Because of the light emitted by the light source 204, the location of the counterpart electrical connector 201 can be determined accurately under all possible lighting conditions.

The hatches 205 are hinged to opposite sides of the socket portion 202. When the hatches 205 are closed, they cover the opening of the socket portion 202. The hatches 205 can be opened by pushing them with the plug portion 103.

The counterpart electrical connector 201 comprises a guiding element 206 for guiding the plug portion 103 into the socket portion 202. The guiding element 206 comprises four guiding plates 207, which are attached to the sides of the socket portion 202. The guiding plates 207 are tilted outwards from the socket portion 202 in such a manner that they form a shape of a frustum of a pyramid. A proximity sensor 208 is attached to the guiding element 206 to sense the presence of the electrical connector 101. Information received from the proximity sensor 208 is utilised in the moving of the electrical connector 101.

The charging connection device 100 and the electric vessel 200 can communicate with each other by using light to carry the signal. The optical interface between the charging connection device 100 and the electric vessel 200 is implemented with optical fibre connectors 114 and 209 attached to the end of the plug portion 103 and to the bottom of the socket portion 202, respectively. The optical fibre connectors 114 and 209 are aligned with each other when the electrical connector 101 is in electrical contact with the counterpart electrical connector 201.

The counterpart electrical connector 201 comprises a push switch 210 that is attached to the bottom of the socket portion 202. The push switch 210 is used for detecting when the electrical connector 101 is in electrical contact with the counterpart electrical connector 201. The push switch 210 is configured to be pushed by the plug portion 103 of the electrical connector 101. The information obtained from the push switch 210 can be used in deciding when electric power can be supplied to the electric vessel 200.

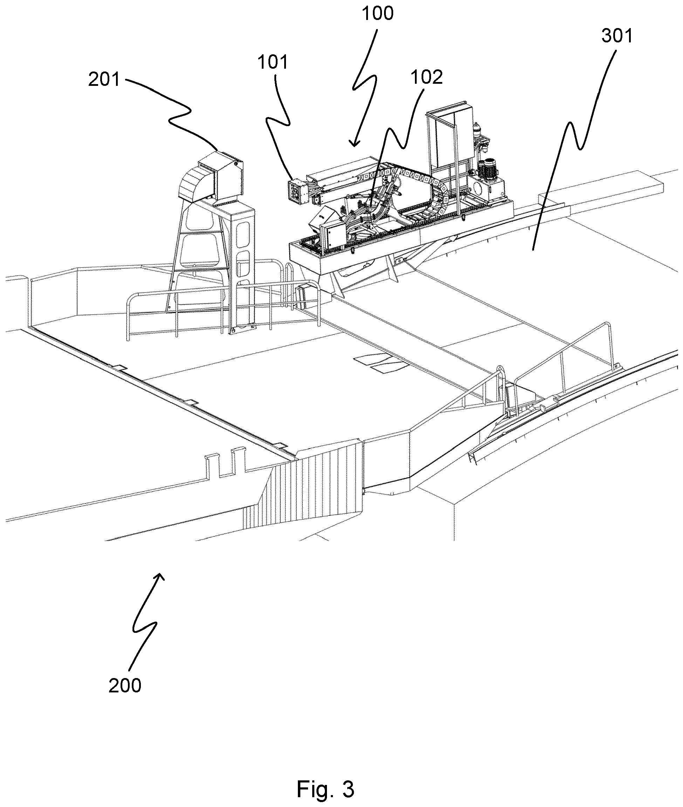

Fig. 3 illustrates a charging arrangement according to an embodiment of the invention. The charging arrangement comprises a ramp 301 that is pivotally mounted to the shore, and a charging connection device 100 that is attached on the ramp 301, near the end of the ramp 301 to which an electric vessel 200 is docked at its bow. The electrical connection between the charging connection device 100 and the electric vessel 200 is established by coupling the electrical connector 101 of the charging connection device 100 to a counterpart electrical connector 201 of the electric vessel 200. The charging connection device 100 is electrically connected with cables 102 to an electric power supply (not shown in fig. 3), which can supply electric power through the charging connection device 100 to a battery system (not shown in fig. 3) of the electric vessel 200. The battery system of the electric vessel 200 is charged while the electric vessel 200 is docked to the ramp 301.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A charging connection device (100), comprising:
- an electrical connector (101) for electrically connecting the charging connection device (100) to an electric vessel (200), and
- means (105, 106) for moving the electrical connector (101),
**characterised in that**:
- the charging connection device (100) comprises an imaging device (113) attached to the electrical connector (101) and configured to detect the position of a light source (204) attached to a counterpart electrical connector (201) in the electric vessel (200), and
- the means (105, 106) for moving the electrical connector (101) is configured to move the electrical connector (101) towards the counterpart electrical connector (201) based on the detected position of the light source (204).

2. The charging connection device (100) according to claim 1, **characterised in that** the imaging device (113) comprises an infrared camera.

3. The charging connection device (100) according to claim 1 or 2, **characterised in that** the imaging device (113) comprises an optical filter configured to block at least a portion of the visible light.

4. The charging connection device (100) according to any of claims 1 to 3, **characterised in that** the means (105, 106) for moving the electrical connector (101) comprises a telescopic arm (105) having a first end and a second end, the electrical connector (101) being pivotally attached to the first end of the telescopic arm (105).

5. The charging connection device (100) according to claim 4, **characterised in that** the electrical connector (101) is pivotally attached to the first end of the telescopic arm (105) with two hinges (107) arranged perpendicularly relative to each other.

6. The charging connection device (100) according to claim 4 or 5, **characterised in that** the means (105, 106) for moving the electrical connector (101) comprises a main arm (106) having a first end and a second end, the first end of the main arm (106) being pivotally attached to the second end of the telescopic arm (105), and means (109) for pivoting the telescopic arm (105) relative to the main arm (106).

7. The charging connection device (100) according to any of claims 1 to 6, **characterised in that** the charging connection device (100) comprises means for detecting when the electrical connector (101) is in electrical contact with the counterpart electrical connector (201).

8. An electric vessel (200), comprising:
- a counterpart electrical connector (201) for electrically connecting the electric vessel (200) to a charging connection device (100),
**characterised in that** the electric vessel (200) comprises:
- a light source (204) attached to the counterpart electrical connector (201) and configured to emit light to an imaging device (113) attached to an electrical connector (101) of the charging connection device (100).

9. The electric vessel (200) according to claim 8, **characterised in that** the light source (204) comprises at least one infrared light-emitting diode.

10. The electric vessel (200) according to claim 8 or 9, **characterised in that** the counterpart electrical connector (201) comprises two hatches (205) for covering an opening of a socket portion (202) of the counterpart electrical connector (201).

11. The electric vessel (200) according to claim 10, **characterised in that** the counterpart electrical connector (201) comprises a guiding element (206) for guiding a plug portion (103) of the electrical connector (101) into the socket portion (202).

12. The electric vessel (200) according to any of claims 8 to 11, **characterised in that** the electric vessel (200) comprises means (210) for detecting when the counterpart electrical connector (201) is in electrical contact with the electrical connector (101).

13. A charging arrangement, **characterised in that** the charging arrangement comprises:
- a charging connection device (100) according to any of claims 1 to 7, and
- an electric vessel (200) according to any of claims 8 to 12.

14. A method for establishing an electrical connection between a charging connection device (100) and an electric vessel (200), **characterised in that** the method comprises:
- using a light source (204) attached to a counterpart electrical connector (201) of the electric vessel (200) to emit light,
- using an imaging device (113) attached to an electrical connector (101) of the charging connection device (100) to detect the position of the light source (204), and
- moving the electrical connector (101) towards the counterpart electrical connector (201) based on the detected position of the light source (204).

15. The method according to claim 14, **characterised in that** the method comprises:
- detecting whether the electrical connector (101) is in electrical contact with the counterpart electrical connector (201), and
- if the electrical connector (101) is in electrical contact with the counterpart electrical connector (201), supplying electric power from the charging connection device (100) to the electric vessel (200).
